# EUROPÄISCHE PATENTSCHRIFT

(11) **EP 0 526 715 B1**
(45) Veröffentlichungstag und Bekanntmachung des Hinweises auf die Patenterteilung: **04.09.1996**
(21) Anmeldenummer: 92109967.7
(22) Anmeldetag: 13.06.1992
(51) Int. Cl.: H04M 1/02, H04M 1/06, H04M 1/72

(54) **Auflage für einen Fernsprechhandapparat**
Cradle for a telephone handset
Berceau pour combiné téléphonique

(30) Priorität: 27.06.1991 DE 4121198; 27.06.1991 DE 4121197
(43) Veröffentlichungstag der Anmeldung: 10.02.1993
(73) Patentinhaber: ROBERT BOSCH GMBH, 70442 Stuttgart (DE)
(72) Erfinder: Girscher, Wolfgang, Dipl.-Ing., W-6000 Frankfurt-Kalbach (DE); Baier, Klaus-Peter, Dipl.-Ing., W-6053 Obertshausen (DE); Hosoe, Isao, I-20144 Mailand (DE)

(56) Entgegenhaltungen:
- EP-A- 0 183 268
- WO-A-83/02514
- DE-A- 387 458
- DE-A- 2 101 382
- GB-A- 2 186 153
- US-A- 3 365 550
- US-A- 4 511 761

## Beschreibung

Die Erfindung betrifft einen Fernsprechapparat mit einer an der Oberseite des Gehäuses angebrachten Auflage für den, zwei elektroakustische Wandler und einen dazwischenliegenden Griffteil aufweisenden Handapparat, und mit einem im Innern des Gehäuses befindlichen Gabelumschaltkontakt, welcher durch den auf der Auflage befindlichen Handapparat betätigt wird.

Ein derartiger Fernsprechapparat ist bereits bekannt. So wird in der DE-OS 36 07 727 ein pultförmiger Fernsprechapparat beschrieben, welcher auf der Gehäuseoberseite mit zwei Mulden versehen ist, in welchen der Handapparat in der Ruhelage liegt. Die beiden Mulden sind dabei derart angebracht, daß der Handapparat parallel auf der pultförmigen Schräge, d. h. senkrecht zu der vor dem Fernsprechapparat sitzenden Bedienungsperson liegt.

Eine andere Auflageposition des Handapparates in der Ruhelage ist beispielsweise aus der DE-OS 32 02 962 bekannt. In dieser Druckschrift wird ein Fernsprechapparat gezeigt, bei welchem der Handapparat in der Ruhelage auf der Gehäuseoberseite quer zu der vor dem Fernsprechapparat sitzenden Bedienungsperson aufliegt.

Die durch die Gestaltung des Fernsprechapparates vorgegebene Ruhelage des Handapparates zwingt oftmals den Benutzer bei dem Griff zum Handapparat den Fernsprechapparat in eine Lage zu bringen, in welcher der Handapparat bequem abgehoben werden kann, wenn der Fernsprechapparat sich nicht bereits in einer entsprechenden Lage befindet.

Die Aufgabe der Erfindung besteht nun darin, einen Fernsprechapparat der eingangs genannten Art dahingehend auszugestalten, daß der Handapparat immer leicht griffbereit ist.

Diese Aufgabe wird durch die Merkmale des unabhängigen Anspruchs 1 gelöst. Aus der DE-A-387 458 ist ein Telefon apparat bekannt, wobei die Auflage durch einen zylindrischen, oben abgerundeten Zapfen gebildet wird und der Handapparat auf der Seite der Schallöffnungen für die elektroakustischen Wandler zwischen diesen im Griffteil eine entsprechende Vertiefung zur Aufnahme des Zapfens aufweist, wobei durch den auf den Zapfen aufliegenden Handapparat der Gabelumschaltkontakt betätigt wird.

Durch die im Griffteil angebrachte Vertiefung ruht der Handapparat sicher auf dem Zapfen, außerdem kann der Handapparat jede Lage einnehmen, da durch Zapfen und Vertiefung eine drehbare Lagerung gegeben ist.

Aus dem deutschen Gebrauchsmuster G 84 20 760.4 ist eine Fernsprechstation mit Ablage für den Handapparat bekannt, bei welcher die Ablage von wenigstens einem Formelement gebildet ist, das in seiner Gestalt einer im Griffteil des Handapparates vorgesehenen von außen zugänglichen Ausnehmung angepaßt ist. Die so gestaltete Ablage ermöglicht es, den Handapparat mit seiner im Griffteil vorgesehenen Ausnehmung zwecks definierter Ruhelage über das betreffende Formelement zu stülpen. Das Formelement und die Ausnehmung sind quaderförmig ausgebildet. Weiterhin läßt sich dieser Druckschrift entnehmen, die derartige Ablage beweglich anzuordnen und durch Ablegen bzw. Aufnehmen des Handapparates Bewegungsimpulse auf eine in der Station enthaltene Schalteinrichtung ausüben. Eine zylinderförmige, zapfenartige Ausbildung der Auflage wird durch diese Entgegenhaltung nicht nahegelegt.

Vorteilhafte Weiterbildungen der Erfindung ergeben sich aus den abbängigen Ansprüchen.

Die Erfindung wird anhand von Ausführungsbeispielen näher erläutert, welche in der Zeichnung dargestellt sind. Es zeigt:

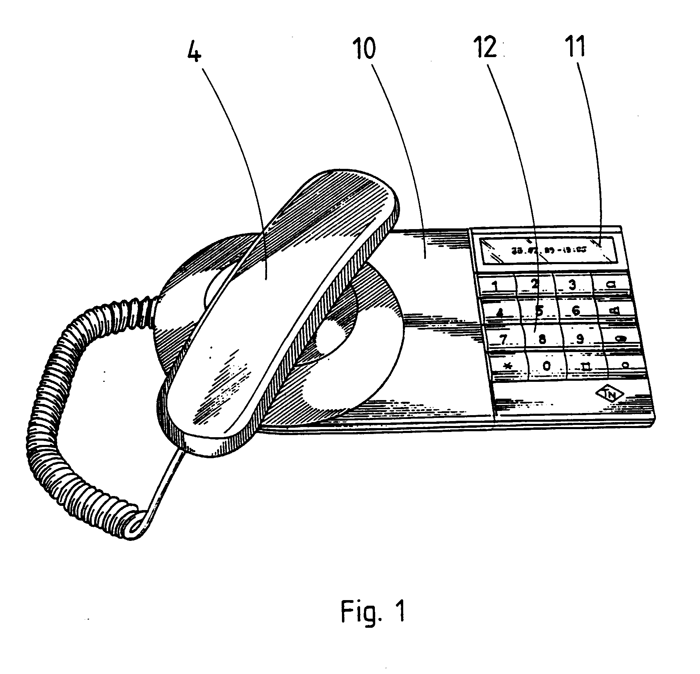

- Fig. 1: die räumliche Darstellung eines Fernsprechapparates mit aufliegendem Handapparat,

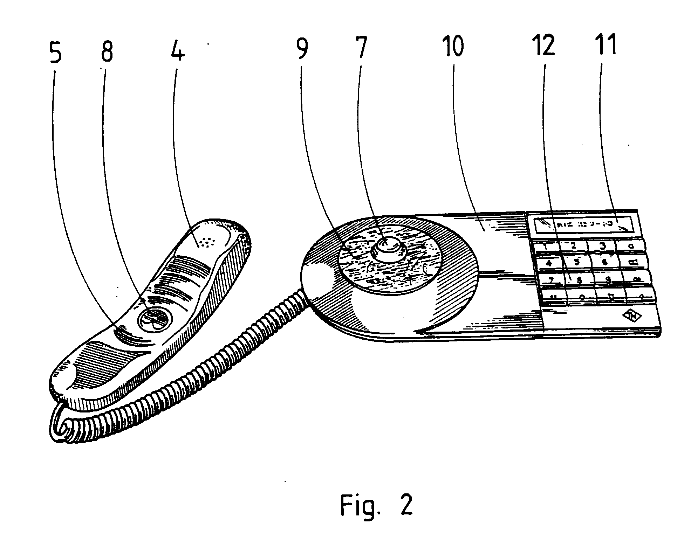

- Fig. 2: die räumliche Darstellung eines Fernsprechapparates mit abgenommenen Handapparat,

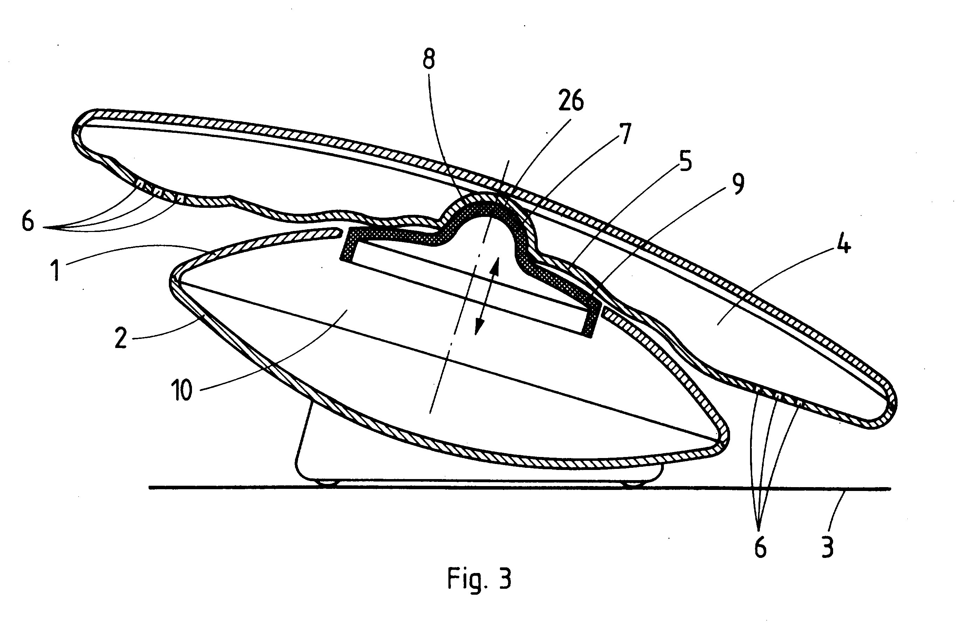

- Fig. 3: einen Schnitt durch den Fernsprechapparat,
- Fig. 4: die Teilansicht eines Schnittes durch den Fernsprechapparat,
- Fig. 5: die Teilansicht eines Schnittes durch den Fernsprechapparat,
- Fig. 6: die Seitenansicht des Zapfens,
- Fig. 7: die Draufsicht auf den Zapfen
und
- Fig. 8: die Ansicht des Handapparates von der Unterseite.

Der Fernsprechapparat 10, welcher aus einem Gehäuseoberteil 1 und einem Gehäuseunterteil 2 besteht, liegt auf einer Auflagefläche 3, beispielsweise einem Tisch, auf. Der Handapparat 4 ist im Bereich des Griffteils 5, und zwar auf der die Schallöffnungen 6 für die nicht gezeigten beiden elektroakustischen Wandler (Hörkapsel, Mikrofon) tragenden Seite, mit einer Vertiefung 8 zur Aufnahme eines Zapfens 7 versehen. Die Vertiefung 8 und der Zapfen 7 können beispielsweise zylindrisch und halbkugelförmig abgerundet ausgebildet sein.

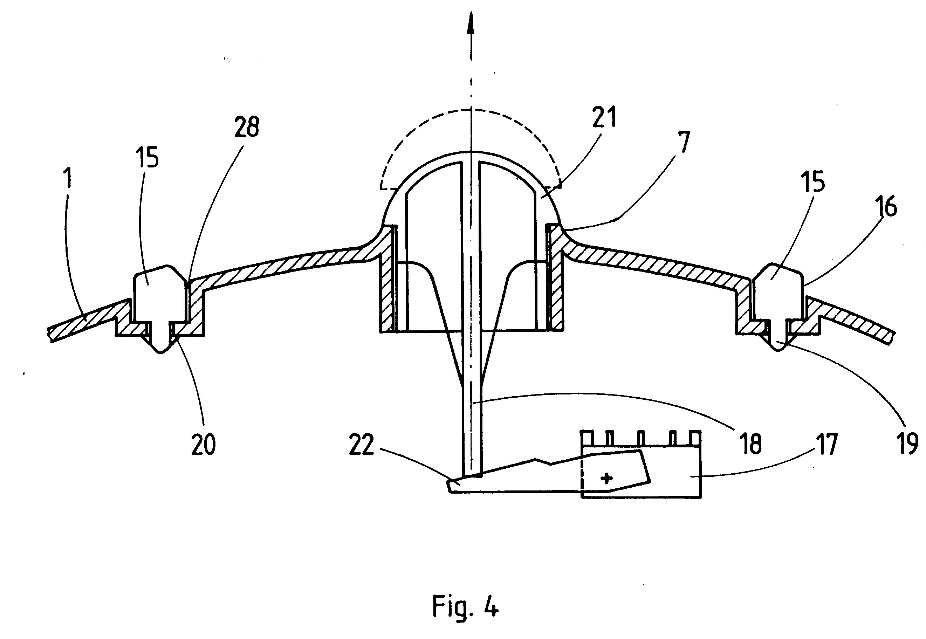

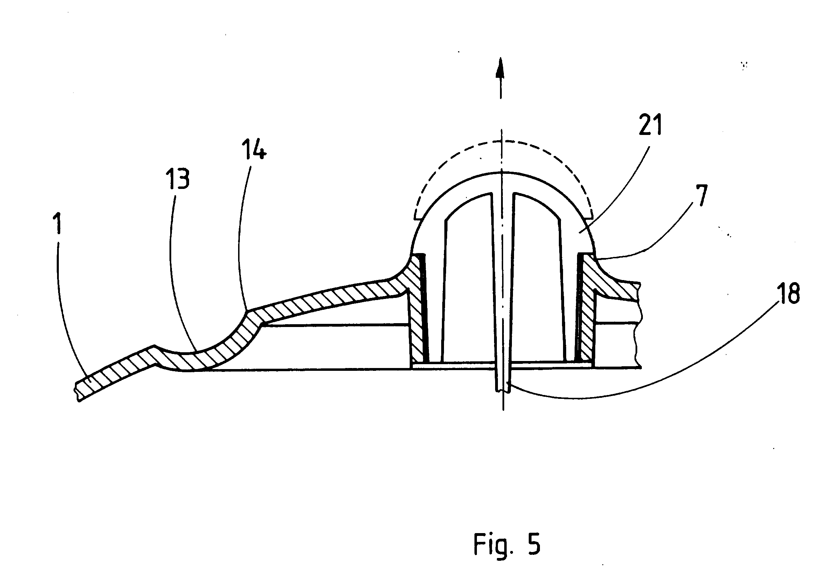

Der Zapfen 7 dient nicht nur zur Halterung des Handapparates in der Ruhelage, sondern in dieser auch noch zur Betätigung des Gabelumschaltkontaktes 17 im Gehäuse des Fernsprechapparates 10. Dies kann beispielsweise mechanisch dadurch geschehen, daß entweder der gesamte Zapfen 7 oder sein halbkugelförmiger Kopf 21 in Pfeilrichtung senkrecht zur Gehäuseoberseite des Fernsprechapparates 10 gelagert ist und mit seinem Stift 18 über den Hebel 22 den Gabelumschaltkontakt 17 betätigt, (s. Fig. 4 und 5). Ebenso kann der halbkugelförmige Kopf 21 fest mit dem Zapfen 7 verbunden sein, wobei durch diesen ein Stift 23 ragt, durch welchen ebenso wie durch den Stift 18 der Gabelumschaltkontakt 17 in der bereits beschriebenen Weise betätigt wird. Der Zapfen 7, der bewegliche Kopf 21 oder auch der Stift 23 werden durch eine nicht gezeigte Feder in der einen Position und durch den aufliegenden Handapparat 4 durch Überwindung der Federkraft in der anderen Lage gehalten, um auf diese Weise die beiden Schaltstellungen des Gabelumschaltkontakts 17 zu erreichen. Die Betätigung des Stifts 23 kann durch eine Fläche 26 innerhalb der Vertiefung 8 im Handapparat erfolgen.

Es ist jedoch auch denkbar, den Zapfen 7 fest mit dem Gehäuseoberteil 1 zu verbinden und die Betätigung des Gabelumschaltkontaktes auf nicht mechanische Weise durchzuführen. Dies kann beispielsweise durch eine Lichtschranke erfolgen, wobei der Lichtstrahl der Lichtschranke, deren Sender und Empfänger sich im Innern des Gehäuses des Fernsprechapparates 10 bzw. im Innern des Zapfens 7 befinden, durch eine auf der Oberseite der Vertiefung 8 angebrachte Reflektionsschicht reflektiert wird, so daß beim Abnehmen des Handapparates der Lichtstrahl der Lichtschranke unterbrochen wird. Es ist jedoch auch eine elektromagnetische Betätigung des Gabelumschaltkontaktes denkbar, wobei im Innern des Handapparates 4 ein Dauermagnet angebracht ist, welcher einen innerhalb des Zapfens 7 angebrachten Kontakt im Ruhezustand des Fernsprechapparates, d. h. bei aufliegendem Handapparat schließt.

Weist der Fernsprechapparat 10 eine Anzeigevorrichtung 11 und/oder eine Eingabetastatur 12 auf, so ist es vorteilhaft, wenn diese außerhalb des Schwenkbereichs des auf dem Zapfen 7 aufliegendem Handapparates 4 angeordnet werden, damit in jeder möglichen Lage des Handapparates 4 die Anzeigevorrichtung nicht verdeckt und die Erreichbarkeit der Eingabetastatur (beispielsweise Wahl bei aufliegendem Handapparat) nicht behindert wird.

Der Zapfen 7 kann auch in einen Teller 9 auslaufen, wobei Zapfen 7 und Teller 9 einstückig, beispielsweise aus einem durchsichtigen oder durchscheinenden Kunststoff hergestellt sind. Der Durchmesser des Tellers 9 entspricht dabei mindestens der Breite des Handapparates 4 im Bereich des Griffteils 5. Dabei können Zapfen 7 und Teller 9 beweglich ausgebildet sein und in der bereits beschriebenen Weise zur Betätigung des Gabelumschaltkontaktes benutzt werden. Durch die Verwendung eines durchscheinenden oder durchsichtigen Materials ist es möglich, den Teller 9 und evtl. auch den Zapfen 7 durch eine im Innern des Fernsprechapparates 10 entsprechend angeordnete, nicht gezeigte Lichtquelle zu beleuchten. Dies kann beispielsweise dauernd geschehen oder auch zur optischen Signalisierung eines Anrufs verwendet werden.

Unabhängig davon, ob der Fernsprechapparat 10 einen Teller 9 aufweist oder nicht, ist auf der Gehäuseoberseite eine konzentrisch um den Zapfen 7 angeordnete Vertiefung 13 vorgesehen, deren innerer Rand 14 der Breite des Handapparates 4 im Bereich des Griffteils 5 entspricht. Die Anbringung einer derartigen Vertiefung ist besonders dann vorteilshaft, wenn der Handapparat 4 im Ruhezustand auf der Gehäuseoberseite aufliegt, wobei die Vertiefung 13 das Abnehmen des Handapparates erleichtert.

Ist der Zapfen 7 in seiner Länge derart ausgebildet, daß der Handapparat auf der Gehäuseoberseite aufliegt, so ist zur Geräuschdämpfung beim Auflegen des Handapparates ein konzentrisch um den Zapfen 7 angeordneter elastischer Ring 15 als Auflage für den Handapparat 4 vorzusehen, wobei der Ring 15 mit Rastnasen 19 versehen ist, welche in Bohrungen 20 einrasten. Für die Aufnahme des elastischen Rings ist die Gehäuseoberseite mit einer entsprechenden Vertiefung 28 versehen, in welcher die Bohrungen 20 angebracht sind. Anstelle der Rastverbindung von Zapfen 19 und Bohrung 20 ist auch eine Verklebung des elastischen Rings 15 in der Vertiefung 28 denkbar. Der elastische Ring 15 kann nun außerhalb der Vertiefung 13 oder auch zwischen derselben und dem Zapfen 7 angeordnet sein. Ist ein Teller 9 vorhanden, so endet dieser am inneren Rand 14, wodurch die Vertiefung 13 außerhalb des Tellers 9 liegt.

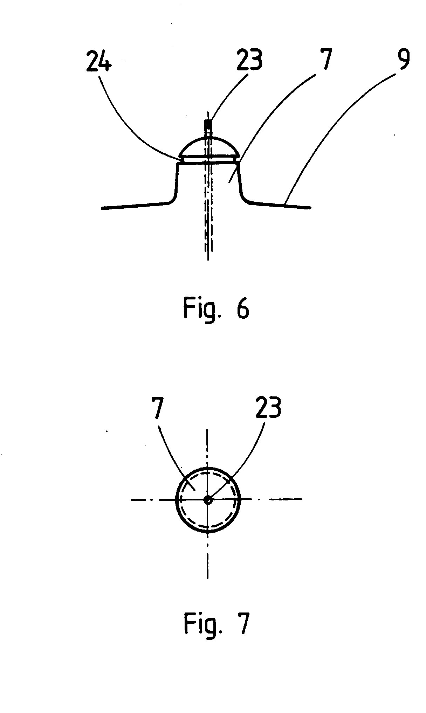

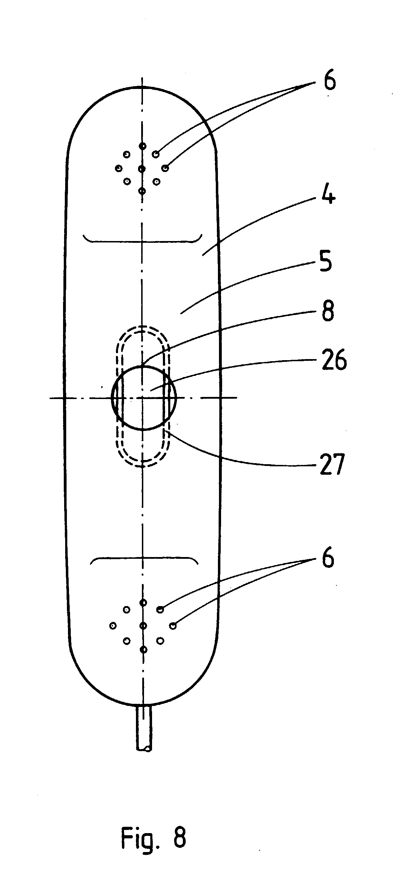

Wird der Fernsprechapparat 10 als Wandapparat verwendet, so ist eine lösbare Verbindung zwischen Handapparat 4 und Zapfen 7 vorzusehen. Dies kann beispielsweise dadurch geschehen, daß der Zapfen 7 mit einer umlaufenden Einkerbung 24 versehen wird (s. Fig. 6 und 7). Der Handapparat 4 ist mit einer elastischen Feder 27 versehen, welche im Bereich der Vertiefung 8 in die Einkerbung 24 bei Auflegen des Handapparates auf den Zapfen 7 einrastet und auf diese Weise eine lösbare Verbindung zwischen Handapparat 4 und Fernsprechapparat 10 herstellt. Da die Einkerbung 24 umlaufend am Zapfen 7 angebracht ist, wird die Drehbarkeit des Handapparates im aufliegenden Zustand nicht beeinflußt (s. Fig. 8). Die lösbare Verbindung kann auch durch zwei sich anziehende Dauermagneten verwirklicht werden, von denen einer im Zapfen 7 und der andere im Handapparat 4 in der Nähe der Vertiefung 8 angebracht ist. Bei der Ausführung als Wandapparat erfolgt zweckmäßigerweise die Betätigung des Gabelumschaltkontaktes 17 durch den durch den Zapfen 7 ragenden Stift 23, welcher von der Fläche 26 in der Vertiefung 8 des Handapparates 4 betätigt wird.

Der Handapparat 4 kann als schnurloser Handapparat ausgebildet sein, wobei dieser lediglich die beiden elektroakustischen Wandler und eine mit diesen verbundene drahtlose Sende- und Empfangseinrichtung und einen Energiespeicher aufweist. Das Aufladen des Energiespeichers kann beispielsweise über in der Vertiefung 8 und im Zapfen 7 angebrachte Kontakte erfolgen, durch welche der Energiespeicher mit einer Ladeeinrichtung im Fernsprechapparat verbunden wird. Zur Kontaktgabe kann bei der Ausführung als Wandapparat die Feder 27 im Handapparat 4 herangezogen werden, die zu diesem Zweck zwei parallele, elektrisch voneinander isolierte Schenkel aufweist, welche in zwei voneinander getrennte Gegenkontakte aufweisende Einkerbungen einrasten.

## Patentansprüche

1. Fernsprechapparat mit an einer an der Oberseite des Gehäuses angebrachten Auflage für den, zwei elektroakustische Wandler und einem dazwischenliegenden Griffteil aufweisenden Handapparat, mit einem im Inneren des Gehäuses befindlichen Gabelumschaltkontakt, welcher durch den auf der Auflage befindlichen Handapparat betätigt wird, die Auflage durch einen zylindrischen, oben abgerundeten Zapfen gebildet wird, und der Handapparat auf der Seite der Schallöffnungen für die elektroakustischen Wandler zwischen diesen im Griffteil eine entsprechende Vertiefung zur Aufnahme des Zapfens aufweist, wobei durch den auf dem Zapfen aufliegenden Handapparat der
Gabelumschaltkontakt betätigt wird,
**dadurch gekennzeichnet,**
daß die Auflage einen Teller (9) aufweist, in dessen Mitte der Zapfen (7) angebracht ist, daß der Durchmesser des Tellers (9) mindestens der Breite des Handapparates (4) im Bereich des Griffteils (5) entspricht, daß die Gehäuseoberseite bzw. der Teller (9) eine, um den Zapfen (7) konzentrisch angeordnete Einkerbung (13) aufweist, deren innerer Rand (14) mindestens der Breite des Handapparates (4) im Bereich des Griffteils (5) entspricht, und daß eine Anzeigevorrichtung (11) und/oder eine Eingabetastatur (12) außerhalb des Schwenkbereichs des auf dem Zapfen (7) aufliegenden Handapparates (4) angeordnet ist.

2. Fernsprechapparat nach Anspruch 1,
**dadurch gekennzeichnet,**
daß die Gehäuseoberseite bzw. der Teller (9) eine um den Zapfen (7) konzentrisch angeordnete elastische, die Gehäuseoberseite bzw. die Oberseite des Tellers (9) überragende elastische Auflage (15) aufweist.

3. Fernsprechapparat nach Anspruch 1 oder 2, dadurch gekennzeichnet, daß Teller (9) und Zapfen (7) einstückig aus einem durchsichtigen oder durchscheinenden Material bestehen und durch eine Lichtquelle beleuchtbar sind.

4. Fernsprechapparat nach Anspruch 3,
**dadurch gekennzeichnet,**
daß die Lichtquelle zur Signalisierung eines Anrufs eingeschaltet wird.

5. Fernsprechapparat nach einem der Ansprüche 1 bis 4,
**dadurch gekennzeichnet,**
daß der Handapparat (4) mit dem Fernsprechapparat (10) drahtlos verbunden ist.

6. Fernsprechapparat nach Anspruch 5,
**dadurch gekennzeichnet**,
daß der Handapparat (4) einen Energiespeicher aufweist, welcher über in der Vertiefung (8) und am Zapfen (7) angeordnete Kontakte mit einer Ladeeinrichtung des Fernsprechapparats (10) verbindbar ist.

7. Fernsprechapparat nach einem der Ansprüche 1 bis 4, dadurch gekennzeichnet, daß der Zapfen (7) bzw. der Kopf (21) des Zapfens, bzw. Zapfen (7) und Teller (9) zur Gehäuseoberseite des Fernsprechapparats (10) senkrecht beweglich gelagert und mechanisch mit dem Gabelumschaltkontakt verbunden ist bzw. sind.

8. Fernsprechapparat nach einem der Ansprüche 1 bis 4, dadurch gekennzeichnet, daß im Inneren des Zapfens (7) eine Lichtschranke vorgesehen ist, deren Lichtstrahl durch den aufliegenden Handapparat (4) derart gesteuert wird, daß der Gabelumschaltkontakt durch den auf den Zapfen (7) aufliegenden Handapparat (4) betätigt wird.

9. Fernsprechapparat nach einem der Ansprüche 1 bis 4, dadurch gekennzeichnet, daß innerhalb des Zapfens (7) ein senkrecht zur Gehäuseoberseite beweglich gelagerter Stift (23) vorgesehen ist, welcher durch eine am Ende der Vertiefung (8) angeordnete Fläche (26) im aufliegenden Zustand des Handapparates (4) den Gabelumschaltkontakt (17) betätigt.

10. Fernsprechapparat nach einem der Ansprüche 1 bis 9, dadurch gekennzeichnet, daß durch geeignete Mittel (24, 27) zwischen dem Handapparat (4) und dem Zapfen (7) eine lösbare Verbindung herstellbar ist.

11. Fernsprechapparat nach Anspruch 10,
dadurch gekennzeichnet,
daß die lösbare Verbindung eine Rastverbindung ist.

12. Fernsprechapparat nach Anspruch 11,
**dadurch gekennzeichnet,**
daß der Zapfen (7) eine umlaufende Einkerbung (24) aufweist, in welche eine seitlich in die Vertiefung (8) des Handapparates (4) ragende Feder (27) einrastet.

13. Fernsprechapparat nach den Ansprüchen 6 und 12, dadurch gekennzeichnet, daß die Kontaktgabe über die Feder (27) erfolgt.

14. Fernsprechapparat nach Anspruch 10,
**dadurch gekennzeichnet,**
daß im Bereich der Vertiefung (8) und innerhalb des Zapfens (7) jeweils ein Dauermagnet derart angebracht ist, daß die Pole der beiden Dauermagneten sich gegenseitig anziehen.

## Claims

1. Telephone apparatus having a cradle, fitted on the upper side of the housing, for the handset, which has two electroacoustic converters and a handle part located between the latter, having a hookswitch contact which is located in the interior of the housing and is actuated by the handset located on the cradle, the cradle being formed by a cylindrical pin rounded off at the top, and the handset having, on the side of the sound openings for the electroacoustic converters and between the latter in the handle part, a corresponding depression to receive the pin, the hookswitch contact being actuated by the handset resting on the pin, characterized in that the cradle has a disc (9) in the centre of which the pin (7) is fitted, in that the diameter of the disc (9) corresponds at least to the width of the handset (4) in the region of the handle part (5), in that the housing upper side or the disc (9) has a groove (13) which is arranged concentrically around the pin (7) and the inner edge (14) of which corresponds at least to the width of the handset (4) in the region of the handle part (5), and in that a display device (11) and/or an input keyboard (12) is/are arranged outside the pivoting region of the handset (4) resting on the pin (7).

2. Telephone apparatus according to Claim 1, characterized in that the housing upper side or the disc (9) has an elastic cradle (15) which is arranged concentrically around the pin (7) and projects beyond the housing upper side or the upper side of the disc (9) .

3. Telephone apparatus according to claim 1 or 2, characterized in that disc (9) and pin (7) consist of a transparent or translucent material, are made in one piece and can be illuminated by a light source.

4. Telephone apparatus according to Claim 3, characterized in that the light source is switched on in order to signal a call.

5. Telephone apparatus according to one of Claims 1 to 4, characterized in that the handset (4) is connected to the telephone apparatus (10) in a cordless manner.

6. Telephone apparatus according to Claim 5, characterized in that the handset (4) has an energy store which can be connected, via contacts arranged in the depression (8) and on the pin (9), to a charging device of the telephone apparatus (10).

7. Telephone apparatus according to one of Claims 1 to 4, characterized in that the pin (7) or the head (21) of the pin, or the pin (7) and disc (9), respectively, are mounted so as to be movable perpendicular to the housing upper side of the telephone apparatus (10) and is or are mechanically connected to the hookswitch contact.

8. Telephone apparatus according to one of Claims 1 to 4, characterized in that provision is made in the interior of the pin (7) for a light barrier, the light beam from which is controlled by the handset (4) resting thereon in such a manner that the hookswitch contact is actuated by the handset (4) resting on the pin (7).

9. Telephone apparatus according to one of Claims 1 to 4, characterized in that provision is made inside the pin (7) for a pin (23) which is mounted so as to be movable perpendicular to the housing upper side, and which actuates the hookswitch contact (17) by means of a surface (26) arranged at the end of the depression (8) in the on-rest condition of the handset (4).

10. Telephone apparatus according to one of Claims 1 to 9, characterized in that a detachable connection can be produced by suitable means (24, 27) between the handset (4) and the pin (7).

11. Telephone apparatus according to Claim 10, characterized in that the detachable connection is a latching connection.

12. Telephone apparatus according to Claim 11, characterized in that the pin (7) has a circumferential groove (24) in which a spring (27), which projects laterally into the depression (8) of the handset (4), latches.

13. Telephone apparatus according to Claims 6 and 12, characterized in that contact is made via the spring (27).

14. Telephone apparatus according to Claim 10, characterized in that a permanent magnet is in each case fitted in the region of the depression (8) and inside the pin (7) in such a way that the poles of the two permanent magnets mutually attract.

## Revendications

1. Appareil de téléphone avec un support, prévu sur la face supérieure du boîtier, pour le combiné qui présente ceux convertisseurs électroacoustiques et une poignée se trouvant entre les deux, avec un contact d'interrupteur à fourche se trouvant à l'intérieur du boîtier, contact qui est actionné par le combiné quand il se trouve sur le support, le support étant formé par un téton cylindrique arrondi en haut, et le combiné présentant, sur la face des enbouchures acoustiques pour les convertisseurs électro-acoustiques, un renfoncement correspondant prévu dans la poignée entre ceux-ci, renfoncement qui sert à recevoir le téton, le contact de l'interrupteur à fourche étant actionné par le combiné quand il repose sur le téton, appareil de téléphone caractérisé en ce que le support présente une assiette (9) au milieu de laquelle est placé le téton (7), en ce que le diamètre de l'assiette (9) correspond au moins à la largeur du combiné (4) dans la zone de la poignée (5), et en ce que l'on dispose alun enregistreur (11) et/ou un clavier d'entrée (12) en-dehors de la zone de pivotement du combiné (4) reposant sur le téton (7).

2. Appareil de téléphone selon la revendication 1, caractérisé en ce que la partie supérieure au boîtier ou l'assiette (9) présente un support élastique (15) disposé concentriquement par rapport au téton (7) et surplombant la face supérieure du boîtier ou la face supérieure de l'assiette (9).

3. Appareil de téléphone selon la revendication 1 ou 2, caractérisé en ce que l'assiette (9) et le téton (7) forment une seule pièce et sont réalisés en une matière transparente ou translucide en pouvant être éclairés par une source de lumière.

4. Appareil de téléphone selon la revendication 3, caractérisé en ce que la source de lumière est branchée pour signaler un appel.

5. Appareil de téléphone selon l'une des revendications 1 à 4, caractérisé en ce que le combiné (4) est relié à l'appareil de téléphone (10) sans fil.

6. Appareil de téléphone selon la revendication 5, caractérisé en ce que le combiné (4) présente un accumulateur d'énergie qui peut être branché, au moyen de contacts disposés dans le renfoncement (8) et sur le téton (7), à un dispositif de recharge de l'appareil de téléphone (10).

7. Appareil de téléphone selon l'une des revendications 1 à 4, caractérisé en ce que le téton (7) ou la tête (21) du téton, ou le téton (74) et l'assiette (9) est ou sont montés de façon mobile perpendiculairement à la face supérieure du boîtier de l'appareil de téléphone (10), et est ou sont reliés mécaniquement au contact de l'interrupteur à fourche.

8. Appareil de téléphone selon l'une des revendications 1 à 4, caractérisé en ce qu'à l'intérieur du téton (7) est prévue une cellule photoélectrique dont le rayon lumineux est commandé par le combiné (4) en position de repos, d'une manière telle que le contact de l'interrupteur à fourche soit actionné par le combiné (4) quand il repose sur le téton (7).

9. Appareil de téléphone selon l'une des revendications 1 à 4, caractérisé en ce qu'à l'intérieur du téton (7) est prévue une tige (23) montée de façon mobile perpendiculairement à la partie supérieure du boîtier, tige (23) qui actionne le contact (17) de l'interrupteur à fourche par une surface (26) disposée à l'extrémité du renfoncement (8), quand le combiné (4) est en position de repos.

10. Appareil de téléphone selon l'une des revendications 1 à 9, caractérisé en ce que l'on peut établir par des moyens appropriés (24, 27) une liaison amovible entre le combiné (4) et le téton (7).

11. Appareil de téléphone selon la revendication 10, caractérisé en ce que la liaison amovible est une liaison par encliquetage.

12. Appareil de téléphone selon la revendication 11, caractérisé en ce que le téton (7) présente une entaille (24) qui en fait tout le tour, entaille dans laquelle s'encliquette un ressort (27) qui pénètre latéralement dans le renfoncement (8) du combiné (4).

13. Appareil de téléphone selon l'une des revendications 6 et 12, caractérisé en ce que la mise en contact électrique a lieu au moyen du ressort (27).

14. Appareil de téléphone selon la revendication 10, caractérisé en ce que, dans la zone du renfoncement (8) et à l'intérieur du téton (7), on place respectivement un aimant permanent, d'une manière telle que les pôles des deux aimants permanents s'attirent mutuellement.
